# EUROPEAN PATENT APPLICATION

(11) **EP 0 638 861 A1**
(43) Date of publication of application: **15.02.1995**
(21) Application number: 94480058.0
(22) Date of filing: 07.07.1994
(51) Int. Cl.: G06F 9/44, G06F 17/30

(54) **Object content depiction in a graphical time bar on a data processing system user interface**

(30) Priority: 13.08.1993 US 106457
(71) Applicant: INTERNATIONAL BUSINESS MACHINES CORPORATION, Armonk, NY 10504 (US)
(72) Inventor: Fitzpatrick, Greg P., Keller, TX 76248 (US); Haynes, Thom R., Euless, TX 76039 (US); Johnson, William J., Flower Mound, TX 75028 (US)
(74) Representative: Lattard, Nicole

(57) **Abstract**

A time based multimedia object is typically presented on a data processing system user interface as a time bar. With the present invention, selected content types of the object are depicted on the user interface in conjunction with the time bar. The content depiction is located along the time bar at a location that corresponds to the temporal location of the depicted content in the presentation of the object. A user is able to identify and select a specific content type of an object from the depiction of the specific content. The time bar can be modified to add a depiction, wherein a search is conducted for the specified content in the object.

## Description

The present invention relates to user interfaces for data processing systems, and in particular to representations of objects using graphical time bars.

Data processing systems allow the presentation of multimedia objects to a user. Multimedia objects can contain data for audio, images or graphics and video.

The construction, editing and presentation of multimedia objects are simplified through the use of graphical user interfaces. A standard graphical user interface representation of a time based object is a rectangular time bar. The time bar, which is typically horizontal, contains a block or an interface that moves along the length of the time bar.

The movement of the block or the interface represents the progress of the presentation of the multimedia object. For example, if the multimedia object is one minute in duration, then the scale of the time bar, from the beginning end to the finishing end, is one minute. As the object is presented to the user, either through speakers, a display or both, the block moves from the beginning end towards the finishing end. The moving block represents the progress of the presentation.

Time bars are useful for editing an object and for playing or presenting portions of an object. A user can use the time bar to select a segment of the object for editing. For example, a user can select a segment of the time bar starting at 20 seconds (from the beginning of the presentation) and ending at 30 seconds, in order to edit a 10 second long segment of the object data. The user can also select a segment of the time bar to play the corresponding segment of the object data.

The problem with this prior art time bar technique is that the user is unable to determine the content of the segments of the objects merely by looking at the time bar. If the user wished to edit, for example, a pastoral scene from a video object, then the user must search the object by playing selected segments on a trial and error basis. For example, the user could select a 10 to 20 second segment of the object and play that segment, while looking for the pastoral scene. Only by viewing the presentation of the object itself is a user able to determine the location of the pastoral scene in the sequence of the object data. This searching process can be a time consuming procedure in both the editing and presentation processes.

It is an object of the present invention to provide a method and system for depicting the content of an object by way of a graphical time bar.

The present invention provides a method and system for depicting content of an object on a data processing system. The object has data that is presented over a period of time. The temporal location of a predetermined type of content of the object in the object is provided. A graphical representation of the object is produced on a user interface of the data processing system. The representation has first and second portions. The first portion represents the period of time of the presentation of the object data. The second portion represents the predetermined content. The second portion is positioned relative to the first portion in a manner that corresponds to the location of the predetermined content in the object.

The present invention provides a user with visual clues of the content of an object. A time based object is typically represented as a time bar on a user interface. A specified content is represented as a visual depiction that is displayed in conjunction with a time bar.

In one aspect of the present invention, the specified content is depicted as a distinct color or by one or more markers located along the time bar.

In still another aspect of the present invention, a user selects the type of content that is to be depicted. The object is searched for the selected content. Then, the time bar of the object is modified on the user interface by adding a depiction of the content to the time bar.

Fig. 1 is a schematic view of a data processing system on which the present invention can be practiced.

Fig. 2 is a schematic view of a prior art graphical time bar.

Fig. 3 is a schematic view of a graphical time bar, modified in accordance with one embodiment of the invention, showing the audio loudness of an object.

Fig. 4 is a schematic view of a graphical time bar, modified in accordance with another embodiment, showing colored sections and markers to depict segments of an object.

Figs. 5a-5e are a flow chart, showing the method of the present invention, in accordance with a preferred embodiment.

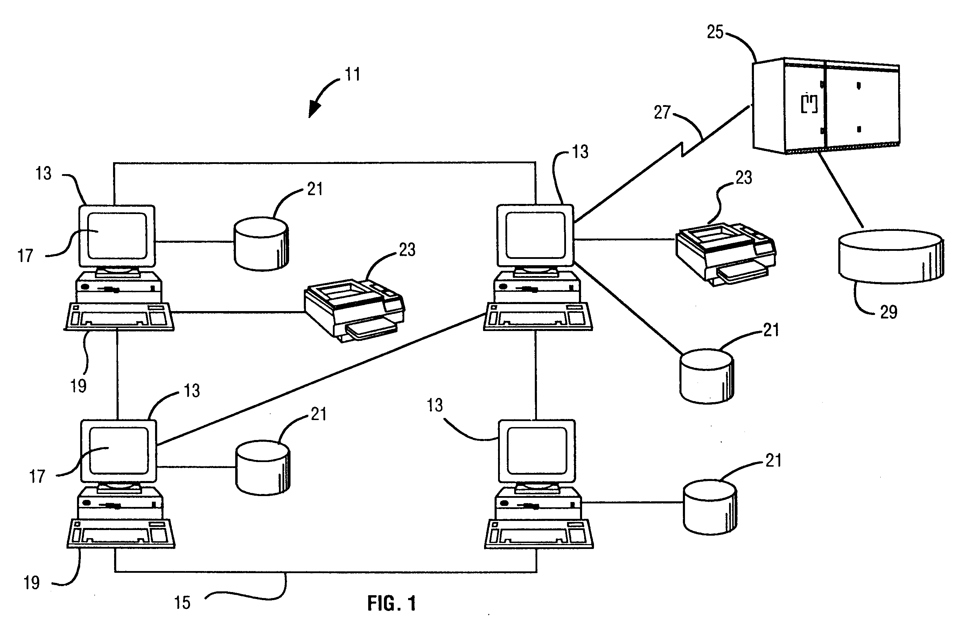

In Fig. 1, there is shown a schematic diagram of a data processing system 11, upon which the present invention can be practiced. The data processing system 11 includes plural individual computers or workstations 13 which are connected together in a local area network (LAN) 15. Each computer 13 includes a user interface, which has a display screen 17, a speaker (or speakers) located inside of the computer, and a keyboard 19. Each computer 13 may also be coupled to a storage device 21 and to a printer or output device 23. One or more of such storage devices 21 may be utilized, in accordance with the present invention, to store applications or resource objects which may be periodically accessed by any user within the data processing system 11. The present invention can be implemented on an individual computer 13.

The data processing system 11 may also include a mainframe or host computer 25 that is coupled to one of the workstations by a communication link 27. The host computer 25 may also be coupled to a storage device 29 which may serve as a remote storage for the computers.

Each computer 13 can manipulate a multimedia object. Such an object could be an audio object, wherein sound is played through the speaker, a graphic or image object, which is presented on the display 17, or a video object, wherein full motion displays are presented on the display 17 and sound is produced by the speaker.

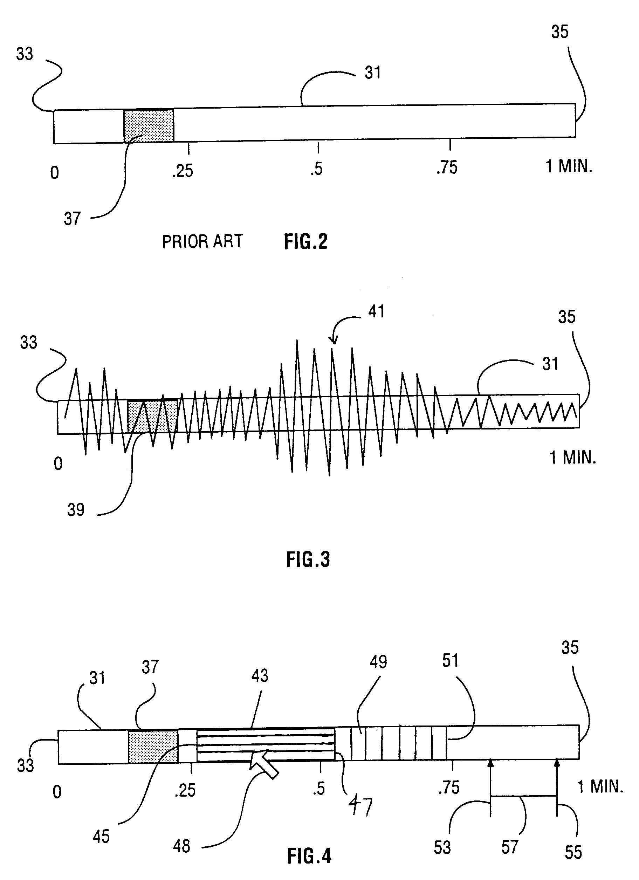

Time based objects, such as those that present data over a period of time, are typically represented graphically by a prior art time bar 31 (see Fig. 2). The time bar is a thin rectangle having a start end 33 and a finish end 35. Labeling is used to indicate the duration of an object. For the time bar of Fig. 2, the object has a one minute duration. Division marks of .25, .5 and .75 are provided. Alternatively, to provide better resolution, the time bar may represent only a portion of the object. For example, if the object was 10 minutes in duration, Fig. 2 would represent a zoomed in look of the first minute of the object. This enables a user to more clearly see the divisions (.25, .5, .75) of a single minute.

As the object is presented to the user through the display and speaker, a slider box 37 moves along inside of the time bar. The location of the slider box tracks the time of the presentation with regard to the data of the object. For example, when the object of Fig. 2 is presented from its beginning, the slider box 37 begins at end 33 and moves toward end 35. When the presentation of the object is 30 seconds (or midway) into the presentation, the slider box 37 is positioned midway between the start and finish ends 33, 35 (just above the .5 division mark). When the presentation of the object ends, the slider box 37 is in contact with end 35.

Also, the user may, using prior art, manipulate the slider box 37 inside of the time bar to play selected segments of the object. For example, if the user wanted to play the segment from .25 to .5 minutes, then the user would position (using a mouse cursor) the slider box 37 at the .25 mark and execute the object until the slider box reached the .5 mark. At that time, execution could be stopped by clicking on the slider box.

Suppose that the object, depicted by the time bar of Fig. 2, has some audio content. The object may be an audio object or a video object. Furthermore, suppose that the user wishes to edit the loudest portion of the audio content. The time bar of Fig. 2 gives no clue as to the content of the object. In fact, the user is unable to determine any information about the audio content of the object by looking at the time bar of Fig. 2. Thus, the user must hunt through the object, searching for the loudest audio portion by playing segments of the object. In a short object (for example, one to two minutes in duration), this may not be a difficult task. However, in a longer object (for example, 20 minutes in duration), hunting for a short audio segment could be time consuming and tedious.

The present invention provides for the depiction of selected aspects of the content of an object on the object's time bar. This depiction allows a user to easily identify selected segments of an object by looking at the time bar. This makes selection of a specific segment by a user much easier.

In Fig. 3, there is shown one example of the present invention. The amplitude or loudness of the audio content of the object is depicted by a waveform 39 located on the time bar 31. The waveform 39 has peaks and valleys. The higher the amplitude of the waveform, the louder the audio content. The loudest portion 41 has the highest overall amplitude.

The waveform depiction is displayed on the screen 17 in conjunction with the time bar for the object. The depiction corresponds temporally with the time bar. Thus, the beginning of the waveform is located at the beginning end 33 of the time bar, the finish of the waveform is located at the finishing end 35 of the time bar and points in between correspond accordingly (for example the loudest portion 41 begins about .5 minutes and therefore is shown as beginning at about the midway point of the time bar).

Using the audio depiction of Fig. 3, the user is easily able to identify the loudest audio portion 41 of the object. This portion can now be selected for editing (or playing).

Other audio portions of the object can be identified with the depiction of Fig. 3. For example, the user can determine the amplitudes of the audio content at the beginning and end of the object.

In Fig. 4, there is shown another example of content depiction of an object on a time bar. The object represented by the time bar 31 has visual frames that are displayed. Suppose that a user wishes to identify a pastoral lake scene that is contained in the object. The user provides a description of this to the present invention, which searches the object for the pastoral lake scene. In addition, the present invention searches for the beginning and end of the pastoral lake scene. Once the desired content is found, the time bar is modified to provide an indication to the user of that segment which contains the pastoral lake scene. In Fig. 4, the pastoral lake scene is depicted by a blue (for pastoral or calm) segment 43. The blue segment 43 is located in the time bar in the path of the slider box 37. The start point 45 (relative to end 33) of the blue segment 43 corresponds to the start time (relative to the initial start time of the object) of the pastoral lake scene of the object. For example, if the pastoral lake scene starts at about 14 seconds into the presentation of 9-93-01 the object, then the start point 45 of the blue segment 43 starts slightly before the .25 mark on the time bar. Likewise, the finish point 47 of the blue segment 43 corresponds to the finish time of the pastoral lake scene of the object.

A red segment 49 is also provided on the time bar 31. The red segment 49 designates- a more active scene (red being a warmer color than blue). The red segment has a start time 47 and a finish time 51 that corresponds to the start and finish of the active scene.

A third segment of the object is depicted in Fig. 4. The third segment is depicted by markers or arrows 53, 55 pointing to specific points along the time bar. The first arrow 53 designates the start time and the second arrow 55 designates the finish time of the third segment. A connecting bar 57 is provided to tie the arrows together. Another way to depict the third segment is by zooming that segment. Thus, segments or portions of an object can be depicted on a time bar in a variety of ways.

Identification of the desired content is greatly simplified by using a distinctive marker or representation for that segment. By displaying each segment in a distinctive manner,the user is able to easily identify one segment over the other segments. The user can select any one of the three depicted segments 43, 49, 57 in Fig. 4 for editing or playing. Selection of the blue segment 43, or any other content depiction, can occur using a mouse cursor 48.

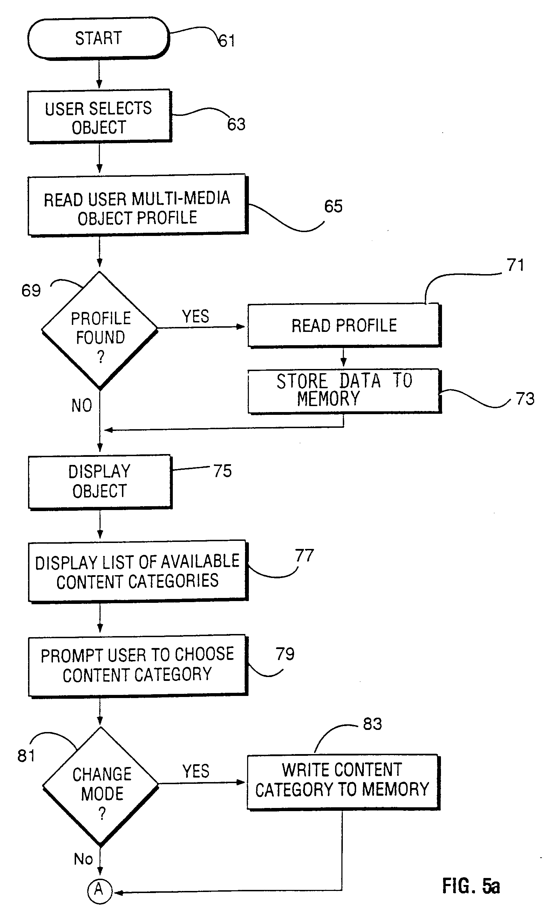

Referring now to Figs. 5a-5e, the method of the present invention will now be described. In the flow charts, the following graphical conventions are observed: a rectangle for either a process, function or screen display, a diamond for a decision and a circle for an off-page connector. These conventions are well understood by programmers skilled in the art of user interfaces and the flow charts are sufficient to enable a programmer skilled in the art to write code in any suitable computer programming language, such as BASIC, PASCAL or C for a computer such as the IBM Personal System / 2 (PS/2) family of computers which supports these languages.

Referring to Fig. 5a, the method is invoked by a user pressing a well known key (for example *"*F8*"*) on the keyboard 19 (see Fig. 1) or by using some other input device. This starts the method, step 61. In step 63, the user selects the specific multimedia object which is to be represented as a time bar 31.

In step 65, the method reads the user's profile for the selected multimedia object. The profile contains a listing of available content categories as well as a listing of available depiction means. The listing of available content categories provides the type of contents for the object. The content categories provide the search criteria for the search service in step 95. The search criteria may contain logical operators such as AND, OR, XOR, etc. The content categories may be user or system specified. For example, an audio object may have several types of content categories, such as amplitude or loudness, frequency or pitch, pauses, etc. An object with visual frames may have as content categories the presence of a figure or shape (such as a person or physical object (building, car, etc.)), continuity between frames (which indicates minimum change from one frame to another such as viewing a motionless object), discontinuity between frames (which indicates an action sequence), colors, etc.

The listing of available depiction means provides the graphical representations that are available to a user. These may be user or system specified. For example, waveforms, colors or markers of various sizes and shapes could be used as representations.

In step 69, the method determines if the profile has been found. If the result of step 69 is YES, then in step 71 the method reads the profile. In step 73, the method stores the data contained in the profile in memory. After step 73, the method proceeds to step 75. If the result of step 69 is NO, no profile is found, then system-provided defaults are used. The user profile can be edited in accordance with conventional means.

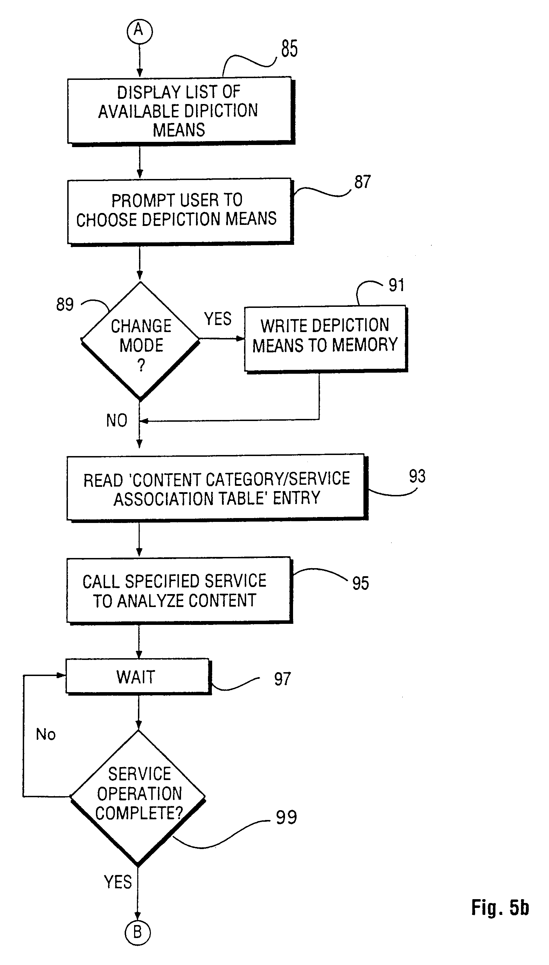

In step 75, the object is displayed by way of its graphical representation in the form of a time bar 31 (see Fig. 2). In step 77, the list of available content categories is displayed to the user on the screen 17. Steps 79-83 allow the user to edit the list of available content categories. In step 79, the user is prompted to choose a specific content category from the list. The chosen content category can be edited by the user. In step 81, the method determines if the user has made a change to the selected content category. If the result of step 81 is YES, then in step 83 the changed content category is written to memory. After step 83, or if the result of step 81 is NO, the method proceeds to step 85 in Fig. 5b.

In step 85, the method displays the list of available depiction means on the screen 17. In step 87, the user is prompted to choose a specific depiction means. The chosen depiction means can be edited by the user. In step 89, the method determines if the user has made a change to the selected depiction means. If the result of step 89 is YES, then in step 91 the changed depiction means is written to memory. After step 91, or if the result of step 89 is NO, then the method proceeds to step 93.

Up to step 93, the user has selected a content category and a depiction means. There is provided a content category/service association table. The content category/service association table associates each of the content categories with an appropriate search service. For example, if the selected content category is loudness; then the search service associated with the content category is a volume analysis service. The search service is able to search for and identify specified segments of an object when provided with a satisfactory specification. Thus, when the user designates a loudness parameter, the volume analysis service is able to identify the desired segment of the object.

Another type of search service available is a pattern recognition service, which is able to identify shapes and objects such as buildings, cars, peoples' faces, etc. in visual frames. A content category relating to the presence of a figure or a shape would be associated with a pattern recognition service. Still another type of search service available is a continuity service which searches for visual successive frames that do not exhibit much change (for example frames showing a motionless object). Still another type of search service is a discontinuity service. A content category relating to continuity would be associated with a continuity service, while a content category relating to discontinuity would be associated with a discontinuity service. These search services exist in the prior art.

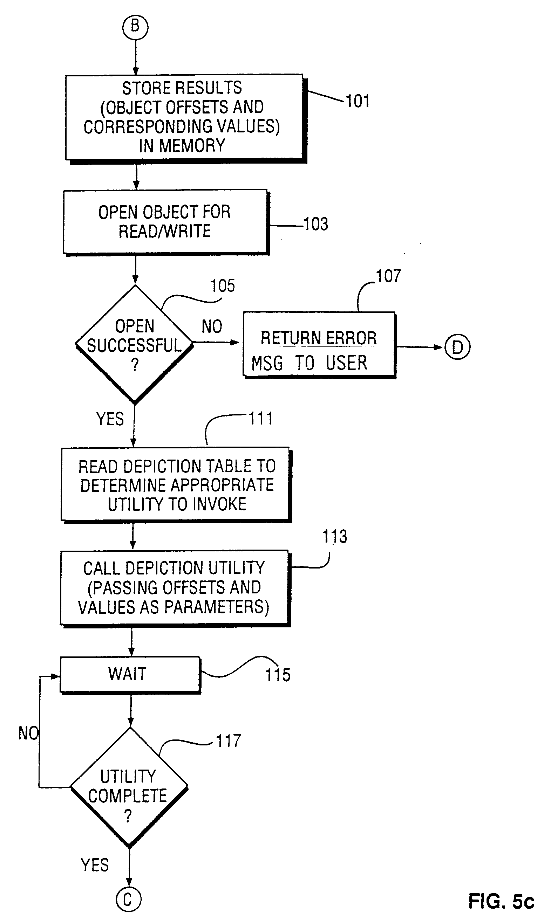

In step 93, the method reads the entry for the selected content category from the content category/service association table. This identifies the specific search service that is associated with the specified content category. In step 95, the search service that has been specified is called in order to analyze the contents of the object. This is performed as an asynchronous call. In step 97, the method waits for the search service to complete its operation. In step 99, the method determines if the search service has completed its search operation. If the result of step 99 is NO then the method returns to step 97 to wait. If the result of step 99 is YES, then the method proceeds to step 101, Fig.5c.

The search service returns object offsets and corresponding values for the specified content category that was found. The offsets are the starting and finishing locations of the segment of the specified content category in the object's data. Offsets can be expressed in minutes, frames, etc. From the information returned by the search service, the location of the segment in memory is determined as well as the temporal location (or offsets) of the segment relative to the temporal presentation of the object. A search service may return two or more "hits", wherein two or more segments of the specified content category have been found. The offsets and corresponding values are returned for all hits. In step 101, the results from the search service are stored in memory.

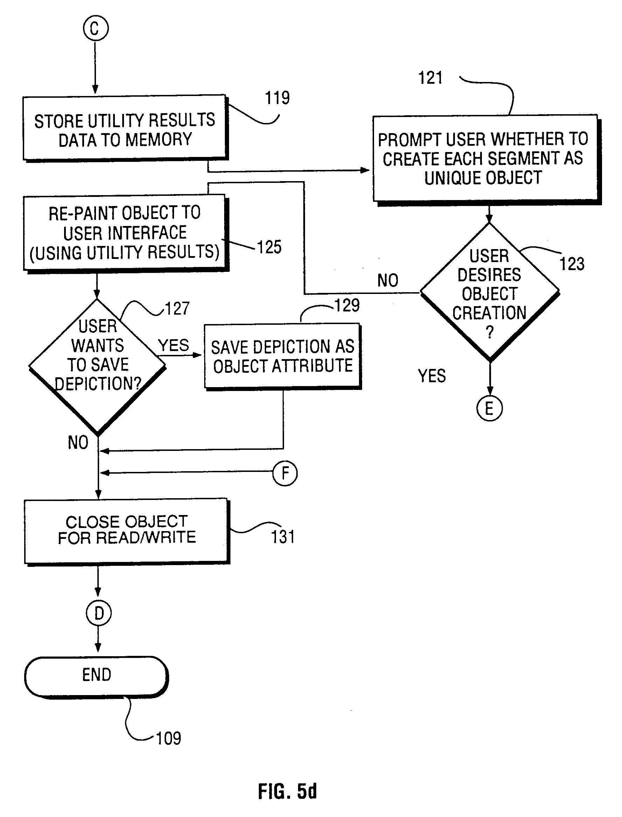

In step 103, the object is opened for a read/write operation. Opening the object is performed in order to modify the time bar 31 of the object in order to show the specified content category in accordance with the specified depiction means. In step 105, the method determines if the open has been successful. The user may not have sufficient authority to read or write to the object. If this is true, then a NO results from step 105, and an error message is returned to the user, step 107. After step 107, the method ends, Fig.5d, step 109. If the result of step 105 is YES, then the method proceeds to step 111.

There is provided a depiction table which associates each of the description means in the profile with a utility. Each utility is able to modify the graphical user interface time bar so as to provide a graphical representation of the content category. For example, if the depiction means is a waveform, then a waveform utility is associated with that depiction means. The waveform utility uses the data segment of the object that was found by the search service to provide a waveform representation of the audio content of the specified data. Depiction using color uses a color utility for providing a colored bar within the time bar. Depiction using markers uses a character or icon utility. These utilities are conventional and commercially available.

In step 111, the method reads the depiction table to determine the appropriate utility for the specified depiction means. In step 113, the method calls the specified depiction utility. When calling the utility, the offsets and values of the specified content category that were stored in step 101 are passed to the depiction utility as parameters. The call is made asynchronously. In step 115, the method waits for the depiction utility. In step 117, the method determines if the depiction utility has been completed. If the result of step 117 is NO, then the method returns to step 115 to wait. If the result of step 117 is YES, then the method proceeds to step 119, Fig.5d.

Referring to Fig.5d, in step 119, the method stores the data resulting from the utility operation in memory.

In step 121, the method prompts the user as to whether the user wishes to create each segment as a unique object. Creating a segment as an object and presenting that object on the display allows the user to access that segment merely by selecting the object. In addition, the segment can be edited separate and apart from the underlying object which is represented by the complete time bar 31. In step 123, the method determines if the user desires to create an object. If the result of step 123 is NO, the method proceeds to step 125. In step 125, the object is repainted to the user interface using the results of the depiction utility. Thus, if the user wishes to add a waveform depiction for the loudness of the audio content, then step 125 repaints the time bar of Fig.2 to become the time bar plus corresponding waveform of Fig.3.

In step 127, the method determines if the user wants to save this depiction. If the result of step 127 is YES, then in step 129 the depiction is saved as an object attribute. Thus, whenever the graphical time bar for that particular object is redisplayed, the content depiction may optionally also be displayed. After step 129, or if the result of step 127 is NO, then the method proceeds to step 131. In step 127, the object is closed for read/write. The method then ends, step 109.

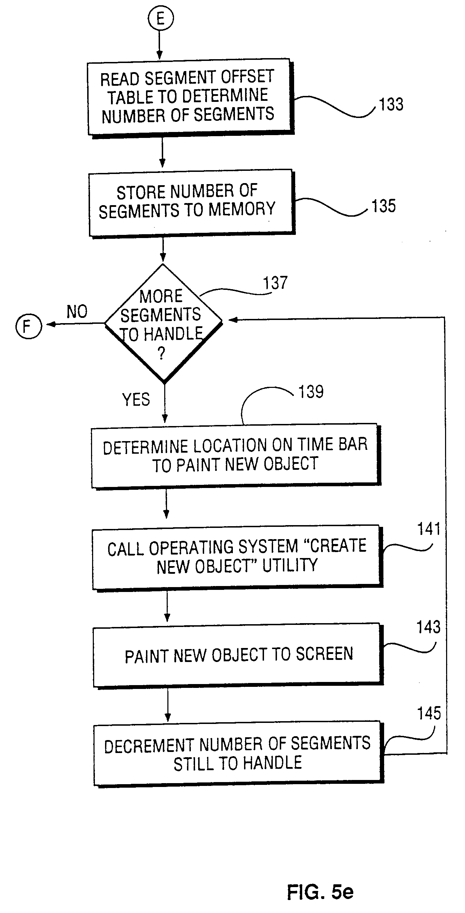

If the result of step 123 is YES, so that a user wishes to create an object for each segment, then the method proceeds to step 133, Fig.5e. In step 133, the method reads a segment offset table that was stored in step 101 of Fig.5c. This is to determine the number of segments or hits that were returned by the search service. In step 135, the number of segments is stored to memory. In step 137, the method determines if there are more (or any) segments to handle. If the result of step 137 is YES, then the method proceeds to step 139. In step 139, the method uses the offsets for the first segment to determine the location on the time bar to paint the new object. Then, in step 141, a create new object utility is called. Typical prior art operating systems contain such a utility, which provides a handle (such as a pointer) to the new object and provides space for the new object. In step 143, the method paints the new object to the screen using the results of the depiction utility. In step 145, the number of segments is decremented. The method then returns to step 137 to determine if there are any more segments to handle. If YES, then the method continues with steps 139-145. If all of the segments have been processed, then the result of step 137 is NO, wherein the method proceeds to step 131.

Steps 139-145 create an N number of objects corresponding to the N number of segments returned by the search service or otherwise designated for depiction. These objects may be logically stacked on top of each other on the user interface if there is spatial overlap among the objects along the time based axis. One way to describe this stacking of plural objects is to refer to the Z axis. The user interface display contains an X axis and a Y axis. The Z axis of the display logically projects perpendicularly outward from the screen 17. Thus, these objects would be stacked on top of the time bar along the Z axis, with the newer objects at the top of the Z order.

In order to depict a second content category in the same object, the method of Figs.5a-5d is repeated.

## Claims

1. A method for depicting content of an object on a data processing system, said object having data that is presented over a period of time, comprising the steps of:
a) providing a temporal location of a predetermined type of content of said object in said object; and
b) producing a graphical representation of said object on a user interface of said data processing system, said representation having a first portion and a second portion, said first portion representing said period of time of said presentation of said object data, said second portion representing said predetermined content, said second portion being positioned relative to said first portion in a manner that corresponds to said location of said predetermined content in said object.

2. The method of claim 1 wherein said step of providing a location of said predetermined type of content of said object in said object further comprises the step of searching said object for the location of said predetermined content.

3. The method of claim 1 wherein said step of producing a graphical representation of said object on a user interface further comprises the step of representing said first portion as a time bar.

4. The method of claim 3 wherein said step of producing a graphical representation of said object on a user interface further comprises the step of representing said second portion by a color, shape or size that is different than a color, shape or size of said time bar.

5. The method of claim 3 wherein said step of producing a graphical representation of said object on a user interface further comprises the step of representing said second portion by one or more markers along said time bar.

6. The method of claim 1 further comprising the step of providing to a user a listing of content types in said object and awaiting a selection of one of said content types by said user, said content selection representing said predetermined content.

7. The method of claim 1 further comprising the step of providing to a user a listing of types of said second portions and awaiting a selection of one of said second portion types by said user, said second portion selection representing said produced second portion.

8. The method of claim I further comprising the step of allowing a user to select said second portion, wherein the selection of said second portion provides the presentation of said predetermined content.

9. A data processing system for depicting content of an object, said object being located on said system and said object having data that is presented over a period of time, comprising:
a) means for providing a temporal location of a predetermined type of content of said object in said object; and
b) means for producing a graphical representation of said object on a user interface of said data processing system, said representation having a first portion and a second portion, said first portion representing said period of time of said presentation of said object data, said second portion representing said predetermined content, said second portion being positioned relative to said first portion in a manner that corresponds to said location of said predetermined content in said object.

10. The data processing system of claim 9 wherein said means for providing a location of said predetermined type of content of said object in said object further comprises means for searching said object for the location of said predetermined content.

11. The data processing system of claim 9 wherein said means for producing a graphical representation of said object on a user interface further comprises means for representing said first portion as a time bar.

12. The data processing system of claim 11 wherein said means for producing a graphical representation of said object on a user interface further comprises means for representing said second portion by a color, shape or size that is different than a color, shape or size of said time bar.

13. The data processing system of claim 11 wherein said means for producing a graphical representation of said object on a user interface further comprises means for representing said second portion by one or more markers along said time bar.

14. The data processing system of claim 9 further comprising means for providing to a user a listing of content types in said object and awaiting a selection of one of said content types by said user, said content selection representing said predetermined content.

15. The data processing system of claim 9 further comprising means for providing to a user a listing of types of said second portions and for awaiting a selection of one of said second portion types by said user, said second portion selection representing said produced second portion.

16. The data processing system of claim 9 further comprising means for allowing a user to select said second portion, wherein the selection of said second portion provides the presentation of said predetermined content.
